(19) Europäisches Patentamt

European Patent Office

Office européen des brevets

(11) **EP 1 674 436 A1**

(12) **EUROPÄISCHE PATENTANMELDUNG**

(43) Veröffentlichungstag:
   **28.06.2006 Patentblatt 2006/26**

(51) Int Cl.:
   *C04B 28/14* (2006.01)   *C07F 7/18* (2006.01)

(21) Anmeldenummer: **05025137.0**

(22) Anmeldetag: **17.11.2005**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(30) Priorität: **25.11.2004 DE 102004056977**

(71) Anmelder: **Wacker Chemie AG**
   **81737 München (DE)**

(72) Erfinder:
   • **Sandmeyer, Frank, Dr.**
     **84508 Burgkirchen (DE)**
   • **Lössel, Georg, Dr.**
     **84547 Emmerting (DE)**
   • **Gerhardinger, Dieter**
     **84323 Massing (DE)**

(74) Vertreter: **Gössmann, Christoph Tassilo et al**
   **Wacker-Chemie GmbH,**
   **Zentralbereich PML,**
   **Hanns-Seidel-Platz 4**
   **81737 München (DE)**

(54) **Glykolfunktionelles Siloxangemisch**

(57) Wasserabweisende Gipszusammensetzung, enthaltend die Bestandteile

(A) 100 Gewichtsteile Gips
(B) 0,05 - 50 Gewichtsteile Oxid und/oder Hydroxid von Alkali und/oder Erdalkalimetallen
(C) 0,05 - 20 Gewichtsteile glykolfunktionelles Siloxangemisch herstellbar durch die Umsetzung aus 1 Moläquivalent Alkyltrihalogensilan oder Alkyltrialkoxysilans mit mindestens 2,5 Moläquivalenten eines Glykols oder Gemisches von Glykolen.

EP 1 674 436 A1

**EP 1 674 436 A1**

**Beschreibung**

Die Erfindung betrifft eine wasserabweisende Gipszusammensetzung, ein Verfahren zur wasserabweisenden Ausrüstung von Gips, ein glykolfunktionelles Siloxangemisch und seine Herstellung.

Die Hydrophobierung von Glasfasern und Mauerwerk ist mit glykolfunktionellen Siloxanen aus DE 1 076 946 bekannt, nicht jedoch von Gips.

Gips kann durch Behandeln mit Si-gebundene Wasserstoffatome enthaltenden Organosiloxanen (H-Siloxane) wasserabweisende Eigenschaften verliehen werden. Die wasserabweisende Wirkung von H-Siloxanen kann durch Zusatz von alkalischen Verbindungen, wie Siliconaten oder Calciumhydroxid verbessert werden. Beispielsweise ist in US-A-5,624,481 die Verbesserung der wasserabweisenden Imprägnierung von H-Siloxanen durch Zusatz von Alkalisilikat beschrieben. Derartige alkalische Verbindungen fördern die Bildung von siliciumorganischen Spaltprodukten aus H-Siloxanen in Anwesenheit von Gips.

WO 99/50200 beschreibt die Verringerung der Wasseraufnahme von Gips durch Behandlung mit H-Siloxan und einem Hydrokolloid, welches ein gegebenenfalls derivatisiertes Galactomannan umfasst.

WO 99/50201 beschreibt die Verringerung der Wasseraufnahme von Gips mit H-Siloxan und einem Hydrokolloid, welches ein gegebenenfalls derivatisiertes Galactomannan umfasst und zusätzlich ein Polysaccharid enthält. Für die industrielle Herstellung von leichten Gipsformkörpern wird ein die wasserabweisenden Zusätze enthaltender Gipsbrei durch Einarbeiten von Luft zu einem Gipsschaum aufgebläht, der schnell abbindet. Dieser Schaum zerfällt rasch durch die Einwirkung von Galactomannan.

Hauptrohstoff zur Herstellung von H-Siloxan ist Methyldichlorsilan ($CH_3Si(Cl)_2H$). Dieses Silan wird als Nebenprodukt aus der Rochow Synthese von Chlorsilanen gewonnen, wobei sich die Ausbeuten an diesem Silan nicht beliebig steigern lassen. Die gesamte Weltproduktion an Methydichlorsilan ist nicht ausreichend, um den Bedarf an daraus herstellbarem H-Siloxan für die Gipshydrophobierung zu decken.

DE 1 076 946 lehrt, dass mit den Umsetzungsprodukten von Alkylalkoxysilanen mit Ethylenglykol Organopolysiloxane erhalten werden, die dazu geeignet sind, porösen und festen Körpern wasserabstoßende Eigenschaften zu erteilen. Die verwendeten Alkylalkoxysilane werden dabei als Gemisch von Monoalkoxy-, Dialkoxy-, Trialkoxy- und Tetraalkoxysilanen eingesetzt, wobei es auch zulässig ist, dass nur ein Trialkoxysilan eingesetzt wird. Das Trialkoxysilan oder das Alkoxysilangemisch wird mit Ethylenglykol umgesetzt, wobei je siliziumgebundene Alkoxygruppe mindestens eine Hydroxylgruppe des Ethylenglykols im Überschuss eingesetzt wird. Das bedeutet, dass je Alkoxygruppe ein Molekül Ethylenglykol eingesetzt wird. Es wird ausdrücklich darauf verwiesen, dass die besonderen Eigenschaften des Produktes wie Lagerstabilität im unverdünnten Zustand, Wasserlöslichkeit und Hydrophobierungsleistung nur bei Einhaltung der beschriebenen Mengenverhältnisse erreicht werden können. Aufgrund des Syntheseverfahrens liegen im Endprodukt bis zu 5% siliziumgebundene Alkoxygruppen vor, die nicht mit Ethylenglykol reagiert haben. Ebenfalls im Produkt vorhanden sind Reste von abgespaltenem Alkohol, der nicht vollständig entfernt werden kann. Die Synthese bedingt eine genaue Temperaturführung, bei der sichergestellt wird, dass die Reaktionstemperatur 100°C nicht übersteigt. Die hydrophobierende Wirkung der Produkte wird nur erhalten, wenn ihnen eine ausreichende Wassermenge zugesetzt wird. Durch die Zugabe von Wasser wird die Stabilität der Produkte reduziert.

GB 2 355 453 A beschreibt die hydrophobe Belegung von Calciumcarbonat mit H-Siloxan oder H-Siloxanemulsionen, wobei hier H-Siloxane zum Einsatz kommen, die cyclische H-Siloxane beinhalten. Die hydrophob belegten Calciumcarbonate sind für den Einsatz als Füllstoff in synthetischen Elastomeren oder Beschichtungen gedacht.

US 2 887 467 beschreibt die Synthese von wasserlöslichen Silsesquioxanen durch Umsetzung von nicht wasserlöslichen Silsesquioxanen mit Ethylenglykol bei Temperaturen von etwa 150°C, wobei je Siliziumatom mindestens 3 Äquivalente Ethylenglykol vorhanden sein müssen. Die so erhaltenen Produkte sind grundsätzlich geeignet für den Einsatz als Hydrophobierungsmittel.

Aufgabe der Erfindung ist es, den Stand der Technik zu verbessern, insbesondere wasserabweisende Gipszusammensetzungen zur Verfügung zu stellen und eine leistungsfähige siliziumbasierende Alternative zu H-Siloxan für die Hydrophobierung zu entwickeln, die in so großen Mengen herstellbar ist, dass damit der Weltbedarf an siliziumbasierenden Hydrophobierungsmitteln, insbesondere für die wasserabweisende Ausstattung von Gips, gedeckt werden kann. Die Aufgabe wird durch die Erfindung gelöst.

Gegenstand der Erfindung ist eine wasserabweisende Gipszusammensetzung, enthaltend die Bestandteile

(A) 100 Gewichtsteile Gips
(B) 0,05 - 50 Gewichtsteile Oxid und/oder Hydroxid von Alkali und/oder Erdalkalimetallen
(C) 0,05 - 20 Gewichtsteile glykolfunktionelles Siloxangemisch, herstellbar durch die Umsetzung aus 1 Moläquivalent Alkyltrihalogensilan oder Alkyltrialkoxysilans mit mindestens 2,5 Moläquivalenten eines Glykols oder Gemisches von Glykolen.

Die wasserabweisende Gipszusammensetzung kann beispielsweise in Pulverform oder als Formkörper vorliegen.

Die wasserabweisenden Gipszusammensetzungen können jede Gipsart enthalten. Unter den Gipsarten sind Plaster ($CaSO_4.H_2O$) in Form von beispielsweise Baugips, Stuckgips oder Isoliergips und Naturgips ($CaSO_4.1/2\ H_2O$) bevorzugt. Auch andere Gipsarten, wie Estrichgips, Marmorgips und Anhydrit können eingesetzt werden. Gut geeignet ist auch das bei der Rauchgasentschwefelung anfallende Calciumsulfat.

Als Oxid und/oder Hydroxid von Alkali- und/oder Erdalkalimetallen (B) sind CaO, MgO, $Ca(OH)_2$, $Mg(OH)_2$ und NaOH bevorzugt, insbesondere $Ca(OH)_2$, CaO und NaOH. Vorzugsweise werden, bezogen auf 100 Gewichtsteile Gips (A), 0,05 bis 50 Gewichtsteile, insbesondere 0,1 bis 30 Gewichtsteile, Oxid und/oder Hydroxid (B) eingesetzt.

Das glykolfunktionelle Siloxangemisch (C) enthält Silane, Öle oder Harze oder ein beliebiges Gemisch derselben und ist aufgebaut aus Einheiten der allgemeinen Formel 1,

$$R_aSiG_bO_{\frac{4-a-b}{2}} \qquad (1),$$

in der

**R** einen einwertigen, gegebenenfalls halogensubstituierten $C_1$-$C_{15}$-Kohlenwasserstoffrest oder einwertige Kohlenwasserstoffoxyreste oder Hydroxylgruppen,

**a** 0, 1, 2 oder 3 bedeutet und im Mittel über das gesamte Molekül einen Mindestwert von 0,1 besitzt,

**b** 0, 1, 2 oder 3 bedeutet und im Mittel über das gesamte Molekül einen Mindestwert von 0,1 besitzt,

**G** ein Sauerstoffatom, einen Hydroxyrest oder einen einwertigen oder zweiwertigen verzweigten oder linearen $C_1$-$C_{25}$-Glykolrest bedeutet, wobei die glykolfunktionellen Siloxane, mit der Maßgabe, dass so viele Glykolreste enthalten sind, dass das Molekül wasserlöslich oder selbstemulgierend ist, vorzugsweise aus einer Umsetzung von Methytrialkoxysilan oder Methyltrihalogensilan mit einem verzweigten oder linearen $C_1$-$C_{25}$-Glykol erhalten werden, wobei die Stöchiometrie der Reaktion so gewählt wird, dass je Moläquivalent Methyltrichlorsilan bzw. Methyltrimethoxysilan 2,0 - 2,99 Moläquivalente des jeweiligen Glykols eingesetzt werden.

Ein weiterer Gegenstand der Erfindung ist ein glykolfunktionelles Siloxangemisch, herstellbar durch die Umsetzung eines Moläquivalents Alkyltrihalogensilans, oder Alkyltrialkoxysilans mit vorzugsweise 2,5 bis 2,9, bevorzugt 2,5 - 2,8, besonders bevorzugt 2,8 Moläquivalent eines Glykols oder Gemisches von Glykolen.

Überraschenderweise wurde festgestellt, dass die gleiche wasserabweisende Wirkung wie mit H-Siloxan mit glykolfunktionellen Siloxanen erreicht werden kann, insbesondere sind es gipshydrophobierende glykolfunktionelle Siloxangemische. Dabei wurde entgegen dem in DE 1 076 946 wiedergegebenen Stand der Technik gefunden, dass man durch die Umsetzung von 1 Moläquivalent Methyltrichlorsilan oder Methyltrimethoxysilan mit weniger als 3 Moläquivalenten Ethylenglykol zu stabilen sehr gut hydrophobierenden Produkten gelangt. Am Beispiel der Gipshydrophobierung wurde gefunden, dass die neuen erfindungsgemäßen glykolfunktionellen Siloxane sogar effizienter sind als ethylenglykolfunktionelle Siloxane gemäß DE 1 076 946.

Erfindungsgemäße glykolfunktionelle Siloxangemische werden zum Beispiel durch Umsetzung von einem Alkyltrihalogensilan, bevorzugt Methyltrichlorsilan, mit einem Glykol wie z.B. Ethylenglykol erhalten, wobei die molaren Verhältnisse so gewählt werden, dass jeweils 1 Moläquivalent Methyltrichlorsilan mit 2,0 bis 2,9 Moläquivalenten Ethylenglykol umgesetzt werden.

Die erfindungsgemäßen glykolfunktionellen Siloxangemische erhält man auch, wenn man anstelle von Alkyltrichlorsilan ein Alkyltrimethoxysilan einsetzt, wobei hier besonders Methyltrimethoxysilan geeignet ist, und dann gegebenenfalls die Bildungsreaktion durch Variationen des pH Wertes beschleunigt und vervollständigt. Die Reaktion ist dabei abgeschlossen, wenn nur noch weniger als 5% der ursprünglich am Methyltrialkoxysilan vorhandenen Alkoxygruppen vorhanden sind. Anstelle vom bevorzugten Ethylenglykol sind auch andere Glykole verwendbar, wie vorzugsweise etwa Diethylenglykol, Propylenglykol, Dipropylenglykol, etc. oder Mischungen derselben.

Das erfindungsgemäße glykolfunktionelle Siloxangemisch enthält Silane, Öle oder Harze oder ein beliebiges Gemisch derselben, wobei sie aufgebaut sind aus Einheiten der allgemeinen Formel 1,

$$R_aSiG_bO_{\frac{4-a-b}{2}} \qquad (1),$$

in der

**R** einen einwertigen, gegebenenfalls halogensubstituierten $C_1$-$C_{15}$-Kohlenwasserstoffrest oder einwertige Kohlen-

wasserstoffoxyreste oder Hydroxylgruppen bedeutet,

**b** 0, 1, 2 oder 3 bedeutet und im Mittel über das gesamte Molekül einen Mindestwert von 0,1 besitzt,

**G** ein Sauerstoffatom, einen Hydroxyrest oder einen einwertigen oder zweiwertigen verzweigten oder linearen $C_1$-$C_{25}$-Glykolrest bedeutet, mit der Maßgabe, dass so viele Glykolreste enthalten sind, dass das Molekül wasserlöslich oder selbstemulgierend ist, wobei die erfindungsgemäßen glykolfunktionellen Siloxane insbesondere dadurch gekennzeichnet sind, dass sie aus einer Umsetzung von Methyltrialkoxysilan oder Methyltrihalogensilan mit einem verzweigten oder linearen $C_1$-$C_{25}$-Glykol erhalten werden, wobei die Stöchiometrie der Reaktion so gewählt wird, dass je Moläquivalent Methyltrichlorsilan bzw. Methyltrimethoxysilan 2,0 - 2,99 Moläquivalente des jeweiligen Glykols eingesetzt werden.

Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste, Aralkylreste, wie der Benzylrest, der alpha- und der 3-Phenylethylrest.

Beispiele für halogensubstituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Besonders bevorzugt sind die nicht substituierten $C_1$-$C_6$-Alkylreste, insbesondere der Methylrest und der Ethylrest.

Beispiele für die $C_1$-$C_{15}$-Kohlenwasserstoffoxyreste sind die vorstehenden $C_1$-$C_{15}$-Kohlenwasserstoffreste, die über ein zweiwertiges Sauerstoffatom an das Siliciumatom gebunden sind. Vorzugsweise sind höchstens 5 % der Reste **R** Kohlenwasserstoffoxyreste.

Beispiele für verzweigte oder lineare $C_1$-$C_{25}$-Glykolreste sind alpha-omega-di-hydroxyfunktionelle Glykole, vorzugsweise Ethylenglykol, Propylenglykol, Di-, Tri- und Tetraethylenglykol, Di-, Tri- und Tetrapropylenglykol, alpha-omega-di-hydroxyfunktionelle Mischglykole aus 1 - 5 Ethylenglykoleinheiten und 1 - 5 Propylenglykoleinheiten sowie Mischungen derselben, besonders bevorzugt Ethylenglykol.

Vorzugsweise weisen die erfindungsgemäßen glykolfunktionellen Siloxangemische eine Viskosität von höchstens 5000 $mm^2$/s, insbesondere von 5 bis 1000 $mm^2$/s, bei 25°C auf.

Falls es sich bei G um einen einwertigen Glykolrest handelt, ist er vorzugsweise hydroxyterminiert. Falls es sich bei G um einen zweiwertigen Glykolrest handelt, verbrückt er zwei Siliciumatome.

Außer den Edukten, die die erfindungsgemäßen glykolfunktionellen Siloxangemische bilden, sind bei der Reaktion gegebenenfalls noch andere Hilfsstoffe anwesend, wie Lösemittel, Katalysatoren. Bei der Auswahl der Lösemittel ist insbesondere darauf zu achten, dass sie nicht mit dem gegebenenfalls eingesetzten Alkyltrihalogensilan Nebenreaktionen eingehen. Typische und geeignete Lösemittel sind aromatische und aliphatische Kohlenwasserstoffe, wie Toluol, Xylol, Ethylbenzol, und aromatenhaltige oder aromatenfreie Aliphatengemische, vorzugsweise mit einem Siedebereich < 180°C.

Insbesondere beim Einsatz von Methyltrimethoxysilan kann die Zugabe von pH Wert erniedrigenden oder pH Wert erhöhenden Verbindungen vorteilhaft sein, um die Reaktion zu beschleunigen und zu vervollständigen. Typische und gut geeignete Katalysatoren sind hier para-Toluolsulfonsäure oder Basen wie Alkalisiliconate. In dem Endprodukt sind gegebenenfalls Restmengen HCl oder siliziumgebundenes Chlor vorhanden, die einen Gesamtrestchlorgehalt ergeben, der sich üblicherweise im Bereich von weniger als 100 ppm bewegt, jedoch auch deutlich niedriger oder höher sein kann. Diese Eigenschaft lässt sich durch Einstellung geeigneter Parameter während der Synthese, Produktisolierung und Aufreinigung steuern.

Diesbezüglich typische Maßnahmen während der Synthese sind beispielsweise die Verlängerung der Reaktionszeit, die Erhöhung der Reaktionstemperatur und die Zugabe geringer Mengen reaktiver Monomerer, wie Alkoholen, Wasser oder anderer Substanzen, wie etwa basische Alkali oder Erdalkalisalze oder Amine, die gegenüber siliziumgebundenem Chlor reaktiv sind und die mit dem Rest an siliziumgebundenem Chlor reagieren können.

Leitet man einen Gasstrom (z.B. Stickstoffgas) während der Synthese durch das Reaktionsgefäß, treibt man dadurch die entstehende HCl ebenfalls aus. Es ist darüber hinaus hilfreich, während der Synthese ein leichtes Vakuum an die Apparatur anzulegen, um den Austrag von HCl aus der Reaktionsmischung zu fördern. Die genannten Maßnahmen können jeweils einzeln betrieben werden oder in Kombination.

Typische Maßnahmen zur Steuerung des Rest Cl-Gehaltes (dies schließt den Rest HCl-Gehalt mit ein) während der Produktisolierung sind beispielsweise das Anlegen von Vakuum oder die Neutralwaschung mit Wasser, dem gegebenenfalls Substanzen beigemischt werden, die einen basischen pH-Wert einstellen, wie etwa Natriumbicarbonat, Natriumhydroxid, etc. oder wasserlöslichen oder wasserdispergierbaren organischen Verbindungen oder wasserlöslichen oder wasserdispergierbaren organischen Salzen.

Ein weiterer Gegenstand ist ein Verfahren zur Herstellung eines glykolfunktionellen Siloxangemisches dadurch gekennzeichnet, dass ein Moläquivalent eines Alkyltrihalogensilans oder Alkyltrialkoxysilans mit vorzugsweise 2,5 bis 2,9, bevorzugt 2,5 - 2,8, besonders bevorzugt 2,8 Moläquivalent eines Glykols oder Gemisches von Glykolen, vorzugsweise Ethylenglykol oder Propylenglykol umgesetzt wird.

Die erfindungsgemäßen glykolfunktionellen Siloxane können sowohl in einem diskontinuierlichen Verfahren hergestellt werden als auch in einem kontinuierlichen Verfahren. Auch Kombinationen aus kontinuierlichen und diskontinuierlichen Schritten sind geeignet, um die erfindungsgemäßen glykolfunktionellen Siloxane herzustellen. Im Kern umfasst das Verfahren zur Herstellung der erfindungsgemäßen glykolfunktionellen Siloxane immer die Schritte Dosierung, Kondensation und Lösemittelverdampfung, bzw. die Schritte Dosierung und Kondensation. Weitere gegebenenfalls notwendige Schritte sind Neutralisation, Filtration und Stabilisierung.

Falls ein Alkyltrihalogensilan, wie zum Beispiel Methyltrichlorsilan mit einem Glykol, wie zum Beispiel Ethylenglykol umgesetzt wird, wird das Trihalogensilan zum Glykol zugegeben, wobei die weiter oben spezifizierte Stöchiometrie eingestellt wird. Vorzugsweise wird das Alkyltrihalogensilan oder Alkyltrialkoxysilan unter das Glykol oder Gemisch von Glykolen zudosiert mit der Maßgabe, dass es nicht auf die Oberfläche getropft wird. Gegebenenfalls kann das Glykol durch Zugabe eines Lösemittels verdünnt werden oder das Lösemittel wird zum Silan zugegeben und die Lösemittel-Silan Mischung zum Glykol zudosiert. Gegebenenfalls kommen als Lösemittel solche in Frage, die weder mit Chlorsilanen noch mit Glykolen reagieren und mit denen sich das verwendete Glykol oder das Chlorsilan klar und homogen mischen lassen und die einen Siedepunkt von mindestens 80°C haben. Dabei ist es nicht erforderlich, dass das Lösemittel sowohl mit dem Glykol als auch dem Chlorsilan eine klare homogene Mischung ergibt. Ebenfalls ist es nicht notwendig, dass das Lösemittel das Produkt aus der Umsetzung klar und homogen löst. Mehrphasigkeit (mehrere flüssige Phasen) ist bei der Reaktionsführung oder der Produktaufarbeitung zulässig, obgleich sie nicht erforderlich ist.

Die Dosierung kann technisch auf unterschiedlichen Wegen erfolgen und hängt im Detail von der jeweiligen Anlagengeometrie und Anlagentechnologie ab. Grundsätzlich sind alle Anlagengeometrien, Anlagen- und Verfahrenstechnologien geeignet, die sich für die Kondensationsreaktionen mit Chlorsilanen eignen. Dies sind beispielsweise solche, die verwendet werden zur kontinuierlichen oder diskontinuierlichen Herstellung von Siliconharzen, also säureresistente Rührwerke, Rührwerkskaskaden, Loop- oder Kolonnenanlagen.

Typische und bevorzugte Anlagenkonstellationen sind beispielsweise:

- solche, bei denen die gesamte Reaktion in einem Rührwerk abläuft, oder
- solche, bei denen zwei oder drei Rührwerke so verschaltet sind, dass in einem Rührwerk ein Teil der Reaktion, wie zum Beispiel die Dosierung und die teilweise Alkoxylierung des jeweils eingesetzten Silans mit dem jeweils verwendeten Glykol oder Glykolgemisch abläuft und in dem anderen oder den anderen Rührwerken andere Teile der Reaktion ablaufen, wie etwa die vollständige Alkoxylierung des jeweils eingesetzten Silans mit dem jeweils verwendeten Glykol oder Glykolgemisch oder eine nachfolgende Kondensationsreaktion und gegebenenfalls das Ausdestillieren des gegebenenfalls verwendeten Lösemittels zur Produktisolierung. Die destillative Abtrennung des gegebenenfalls vorhandenen Lösemittels oder während der Reaktion gebildeter flüchtiger Bestandteile kann, anstelle durch Ausdestillieren aus dem Rührwerk, auch durch Verdampfen der jeweiligen flüchtigen Bestandteile durch Verwendung eines Dünnschichtverdampfers oder eines Fallfilmverdampfers oder ähnlicher Apparaturen erfolgen, wie sie üblicherweise für solche Manipulationen eingesetzt werden.
- solche, bei denen ein Loop mit wenigstens einem Rührwerk verschaltet wird, wobei die Produktmischung und teilweise Reaktion zunächst im Loopreaktor erfolgt und die Vervollständigung der Reaktion im nachgeschalteten Rührwerk erfolgt und die destillative Abtrennung des gegebenenfalls vorhandenen Lösemittels oder während der Reaktion gebildeter flüchtiger Bestandteile durch Verdampfen des gegebenenfalls verwendeten Lösemittels oder der gegebenenfalls während der Reaktion gebildeten flüchtigen Bestandteile durch Verwendung eines Dünnschichtverdampfers oder eines Fallfilmverdampfers oder ähnlicher Apparaturen erfolgen, wie sie üblicherweise für solche Manipulationen eingesetzt werden.
- solche, bei denen zwei Loop Reaktoren so miteinander verschaltet sind, dass ein Teil der Reaktion in einem Loop erfolgt und die Reaktion im zweiten Loopreaktor vervollständigt wird, und die destillative Abtrennung des gegebenenfalls vorhandenen Lösemittels oder während der Reaktion gebildeter flüchtiger Bestandteile durch Verdampfen des gegebenenfalls verwendeten Lösemittels oder der gegebenenfalls während der Reaktion gebildeten flüchtigen Bestandteile durch Verwendung eines Dünnschichtverdampfers oder eines Fallfilmverdampfers oder ähnlicher Apparaturen erfolgen, wie sie üblicherweise für solche Manipulationen eingesetzt werden.
- solche, bei denen ein Teil der Reaktion in einer Kolonnenanlage erfolgt wie z.B. die Synthese eines Alkyltrialkoxysilans aus einem Alkyltrihalogensilan und die Reaktion dann in einem oder mehreren nachgeschalteten Rührwerken oder Kombinationen aus einem Loop Reaktor mit einem weiteren Loop Reaktor oder mit mindestens einem Rührwerk, wie sie bereits oben beschrieben sind, erfolgt und die destillative Abtrennung des gegebenenfalls vorhandenen Lösemittels oder während der Reaktion gebildeter flüchtiger Bestandteile durch Verdampfen des gegebenenfalls verwendeten Lösemittels oder der gegebenenfalls während der Reaktion gebildeten flüchtigen Bestandteile durch Verwendung eines Dünnschichtverdampfers oder eines Fallfilmverdampfers oder ähnlicher Apparaturen erfolgen, wie sie üblicherweise für solche Manipulationen eingesetzt werden.

Die Synthese der erfindungsgemäßen glykolfunktionellen Siloxane kann anstelle von Trihalogensilanen, auch ausgehend von Alkyltrialkoxysilanen, wie zum Beispiel von Methyltrimethoxysilan, erfolgen. Die Dosierung kann in gleicher Weise erfolgen wie sie für die Trihalogensilane beschrieben wurde. Aufgrund der deutlich geringeren Reaktivität der Alkoxysilane ist es hilfreich einen Katalysator zuzugeben, um die Reaktion rascher zum gewünschten Umsatz hin ablaufen zu lassen. Ein solcher Katalysator kann beispielsweise eine Säure sein, wie etwa Salzsäure oder auch para-Toluolsulfonsäure. Im Prinzip kann die Reaktion auch ohne Katalyse erfolgen, benötigt dann allerdings längere Umsatzzeiten und gegebenenfalls höhere Temperaturen. Bei Verwendung von Alkyltrialkoxysilanen kann die Zugabe von Wasser zur Reaktion erforderlich oder vorteilhaft sein.

Bevorzugt ist die Umsetzung ausgehend von Halogensilanen, wie Trichlor- oder Tribromsilanen, insbesondere von Trichlorsilanen und hier wiederum ist Methyltrichlorsilan das bevorzugte Edukt. Nach beendeter Zugabe wird die Reaktionsmischung zur Vervollständigung der Umsetzung erwärmt, wobei die Temperatur vorzugsweise zwischen 80 und 150°C liegt.

Das entstehende Salzsäuregas wird entweder durch einen Gasstrom (Gas kann zum Beispiel Stickstoff sein) ausgetrieben oder durch Anlegen von Vakuum aus der Reaktionsmischung entfernt. Es ist ebenfalls praktikabel, eine Kombination aus Gasstrom und Vakuum zu verwenden, um das HCl Gas auszutreiben.

Die so erhaltene Reaktionsmischung kann sofort aufgearbeitet werden, wie weiter unten beschrieben, wobei dies leicht zu einem geringfügig getrübten Produkt führen kann, das jedoch in seiner Leistungsfähigkeit und Stabilität nicht beeinträchtigt sein muss. Man kann die Reaktionsmischung jedoch auch vor der weiteren Aufarbeitung einem Neutralisationsschritt unterwerfen, um zuverlässig zu einem völlig klaren Produkt zu gelangen. Die Neutralisation erfolgt durch Zugabe von pH-Wert erniedrigenden Stoffen, wie zum Beispiel anorganische Salze wie Natriumbicarbonat oder Alkalihydroxide. Festkörper können aus der Mischung nach der Neutralisation abgetrennt werden durch geeignete Maßnahmen der Feststoffabtrennung, wie zum Beispiel Filtrieren, Abzentrifugieren, Abpressen, etc.

Zur Erhöhung der Lagerstabilität kann der erhaltenen Produktlösung eine geringe Menge einer basischen Verbindung zugesetzt werden. Dabei wird der Stabilisator so gewählt, dass er in der Einsatzmenge von wenigen zehntel Prozent im Produkt klar löslich ist. Es kann sich dabei zum Beispiel um aminische Verbindungen handeln.

Gegebenenfalls eingesetzte Lösemittel werden anschließend verdampft, wobei bekannte Verfahren nach Stand der Technik Anwendung finden, wie zum Beispiel das Abdestillieren unter Normaldruck oder unter reduziertem Druck oder das Dünnschichtverdampfen.

Anwendungen

Gegenstand der Erfindung ist auch ein Verfahren zur wasserabweisenden Ausrüstung von Gips, bei dem

(A) 100 Gewichtsteile Gips mit
(B) 0,05 - 50 Gewichtsteile Oxid und/oder Hydroxid von Alkali und/oder Erdalkalimetallen und
(C) 0,05 - 20 Gewichtsteile glykolfunktionelles Siloxangemisch, herstellbar durch die Umsetzung aus 1 Moläquivalent Alkyltrihalogensilan oder Alkyltrialkoxysilan mit mindestens 2,5 Moläquivalenten eines Glykols oder Gemisches von Glykolen, versetzt werden.

Beim Verfahren zur Hydrophobierung (wasserabweisenden Behandlung) von Gips, kann Gips beispielsweise in Pulverform oder als Formkörper mit glykolfunktionellen Siloxanen oder einer Zubereitung derselben behandelt werden.

Die erfindungsgemäßen glykolfunktionellen Siloxane können zur Gipshydrophobierung mit den bekannten wirkungsverstärkenden Zusätzen, wie sie zum Beispiel auch für die Wirkungsverstärkung von H-Siloxan wirksam sind, eingesetzt werden, also zum Beispiel mit Stärkeethern oder basischen Zuschlagsstoffen wie Zement und weiteren wie sie weiter unten aufgezählt sind.

Die erfindungsgemäßen glykolfunktionellen Siloxane können als reine Stoffe eingesetzt werden oder zur Herstellung von Zubereitungen verwendet werden. Zubereitungen sind beispielsweise wässrige Zubereitungen, bestehend mindestens aus einem erfindungsgemäßen glykolfunktionellen Siloxan und Wasser, wobei sich mit Wasser milchig trübe Flüssigkeiten ergeben. Zur Herstellung einer wässrigen Zubereitung aus Wasser und einem erfindungsgemäßen glykolfunktionellen Siloxan kann die Zugabe eines zusätzlichen Emulgators erforderlich sein. Bei selbstemulgierenden erfindungsgemäßen glykolfunktionellen Siloxanen ist dies nicht erforderlich. Darüber hinaus können gegebenenfalls weitere Substanzen in solchen wässrigen Zubereitungen Einsatz finden, zum Beispiel solche, wie sie unten angegeben sind.

Wässrige, nicht wässrige oder lösemittelbasierende Zubereitungen werden erhalten, indem man die erfindungsgemäßen glykolfunktionellen Siloxane mit anderen Bestandteilen kombiniert, wobei diese Kombinationen nicht zwangsläufig homogene Mischungen ergeben.

Mögliche Komponenten zum Kombinieren sind zum Beispiel

- H-Siloxan,
- Alkoxy- und Aryloxysilane, die zusätzlich organofunktionelle Reste oder Alkyl- oder Arylreste aufweisen können,
- Alkyl oder Arylsiliconate,
- Polydimethylsiloxanöle, die gegebenenfalls anstelle einer oder mehrerer Methylgruppen andere organische Gruppen tragen können, wie andere Kohlenwasserstoffreste als Methylreste, wobei in diesen Kohlenwasserstoffresten durch den Einbau von Heteroatomen wie S, N, O, P, etc. die Kohlenstoffkette unterbrochen sein kann, oder auch organische Funktionalitäten beinhaltet sein können,
- Stärkeether,
- Siliconharze,
- einem oder mehreren organischen Lösemitteln, wie aromatischen Lösemitteln, Ketonen, Estern, Alkoholen, aliphatischen und cycloaliphatischen Lösemitteln, ionischen Flüssigkeiten, Glykolen, etc.
- Wasser,
- organischen Tenside,
- organischen Polymere, wie Polyvinylalkohol, Polyvinylacetat, Polyacrylate, Styrolacrylatcopolymere, Polyvinylbutyrale, Polyurethane, Polyepoxide, etc.
- linearen und verzweigten gegebenenfalls organisch funktionalisierten polyhydroxylierten Kohlenwasserstoffen, wie Ethylenglykol, Diethylenglykol, Propylenglykol, Dipropylenglykol, und höheren Glykolen, Zuckern wie Glykosen, Mannosen, Hexosen, etc.
- Zement
- Kalk
- Gips

oder Kombinationen aus den aufgezählten Komponenten.

Dabei ist es nicht unbedingt erforderlich, dass sich die zu mischenden Komponenten zu einem homogenen einheitlichen Wirkstoffgemisch verarbeiten lassen.

Gegenstand der Erfindung können auch Verfahren zur Hydrophobierung von Formkörpern sein, wobei ein glykolfunktionelles Siloxangemisch verwendet wird.

Vorzugsweise werden die erfindungsgemäßen glykolfunktionellen Siloxane als wässrige Zubereitung, als Emulsion oder als wässriger Schaum verwendet. Zur Herstellung wässriger Zubereitungen können Tenside verwendet werden oder sie können ohne Zugabe von Tensiden hergestellt werden, indem die erfindungsgemäßen glykolfunktionellen Siloxane direkt in Wasser eingebracht werden. Die Herstellung von wässrigen Zubereitungen ohne die Verwendung von Tensiden ist insbesondere dann möglich, wenn die erfindungsgemäßen glykolfunktionellen Siloxane in Wasser selbstemulgierend oder wasserlöslich sind.

Unter den Gipsarten ist Plaster ($CaSO_4 * 0,5 H_2O$) in Form von beispielsweise Baugips, Stuckgips oder Isoliergips bevorzugt. Auch andere Gipsarten wie Estrichgips, Marmorgips, Anhydrit und das bei der Rauchgasentschwefelung anfallende Calciumsulfat sind gut geeignet. Der Gips kann Zusätze enthalten, die die Herstellung von Gipsformkörpern erleichtern oder die Eigenschaften der Gipsformkörper verbessern. Zusätze sind beispielsweise Portlandzement oder Weißzement, Füllstoffe, wie Siliciumdioxid und Cellulosefasern, Beschleuniger, wie Kaliumsulfat und Aluminiumsulfat, Verzögerer, wie Eiweiße oder Weinsäuresalze, Plastifizierungsmittel für den Gipsbrei, wie Ligninsulfonate und Haftvermittler für Karton, wie Stärke.

Vorzugsweise werden, bezogen auf 100 Gewichtsteile Gips, vorzugsweise 0,02 bis 40, bevorzugt 0,1 bis 8, besonders bevorzugt 0,5 bis 4 Gewichtsteile der erfindungsgemäßen glykolfunktionellen Siloxane eingesetzt.

Wenn die Gipszusammensetzung zu einer formbaren Masse verarbeitet wird, muss Wasser zugesetzt werden. Vorzugsweise werden, bezogen auf 100 Gewichtsteile Gips, 30 bis 120, insbesondere 50 bis 90 Gewichtsteile Wasser zugesetzt.

Die Gipszusammensetzung kann auf beliebige Weise hergestellt werden. Die erfindungsgemäßen glykolfunktionellen Siloxane können der Gipszusammensetzung in reiner Form, als wässrige Zubereitung oder Emulsion zugesetzt werden.

Für die Herstellung von Gipsformkörpern wird die Gipszusammensetzung, die die erfindungsgemäßen glykolfunktionellen Siloxane, und eine geringe Menge Zement, vorzugsweise 0,5 Gewichtsprozent, und Wasser enthält, zu einem Gipsbrei verarbeitet. Dieser Gipsbrei kann auch durch Einarbeiten von Luft zu einem Gipsschaum aufgebläht werden.

Gegenstand der Erfindung sind auch Zusammensetzungen, die die erfindungsgemäßen glykolfunktionellen Siloxane und Gips enthalten sowie Formkörper, die diese Zusammensetzung aufweisen.

Erfindungsgemäß sind des weiteren auch Gipsformkörper, die die erfindungsgemäßen glykolfunktionellen Siloxane enthalten. Die Gipsformkörper können durch Formung einer Gipszusammensetzung hergestellt werden, welche Wasser und die erfindungsgemäßen glykolfunktionellen Siloxane enthält. Sie können auch durch Imprägnieren eines Gipsformkörpers mit den erfindungsgemäßen glykolfunktionellen Siloxanen oder einer Zubereitung, die dieselben enthält, nach dem Formen, nach dem Abbinden oder erst nach dem Trocknen hergestellt werden. Das Imprägnieren kann beispielsweise durch Tauchen, Sprühen oder Bestreichen mit den erfindungsgemäßen glykolfunktionellen Siloxanen oder einer Zubereitung, die diese enthält, erfolgen.

Beispiele für Gipsformkörper sind Gipsplatten, wie Wandbauplatten oder Gipskartonplatten.

**Beispiele:**

**Synthesebeispiele: Diskontinuierliche Batchsynthese**

**Beispiele 1: Herstellung von erfindungsgemäßen glykolfunktionellen Siloxanen:**

Apparatur:
2 l Dreihalskolben mit Intensivkühler, Tropftrichter und Flügelrührer. Die Gasableitung und das Anlegen von Vakuum erfolgt über den Intensivkühler.

Allgemeine Vorgehensweise:
Methyltrichlorsilan wird mit Toluol im Verhältnis 1:1 gemischt und zu einer Vorlage aus dem 2,8-fachen molaren Überschuss an Ethylenglykol mittels Tropftrichter zudosiert. An die Apparatur wird ständig ein leichtes Wasserstrahlvakuum angelegt (ca. 200 mbar).

Beispiel a:

Vorlage: 550,00 g Ethylenglykol
In einer geschlossenen Dreihalskolben-Rührapparatur wird Ethylenglykol im Kolben vorgelegt.
Zudosierung: Gemisch aus 473,10 g Methyltrichlorsilan und 473,10 g Toluol wird in den Tropftrichter eingefüllt.
Das Gemisch aus Methyltrichlorsilan und Toluol wird aus dem Tropftrichter unter die Oberfläche der Ethylenglykolvorlage zudosiert. Die Temperatur wird über die Dosiergeschwindigkeit zwischen 50 °C und 55 °C gehalten. Die Zeitdauer der Dosierung beträgt ca. 70 Minuten.
Nach vollständiger Zudosierung des Methyltrichlorsilan/Toluol Gemisches wird das System für 2 Stunden unter Rückfluss gehalten. Nach dem Refluxieren wird der Ansatz auf Raumtemperatur abgekühlt. Dabei bilden sich zwei Phasen, wobei eine Phase Toluol ist und die zweite Phase die Produktphase ist, die das polyethermodifizierte Polysiloxan enthält. Der HCl-Gehalt des Rohproduktes beträgt < 50 ppm.
Die Phasen werden getrennt und aus der Produktphase wird das Toluol mittels Rotationsverdampfer unter Vakuum (ca. 10 mbar, 110°C) abdestilliert.

Beispiel b:

Vorlage: 550,00 g Ethylenglykol
In einer geschlossenen Dreihalskolben-Rührapparatur wird Ethylenglykol im Kolben vorgelegt.
Zudosierung: 473,10 g Methyltrichlorsilan werden in den Tropftrichter eingefüllt.
Methyltrichlorsilan wird aus dem Tropftrichter unter die Oberfläche der Ethylenglykolvorlage zudosiert. Die Temperatur wird über die Dosiergeschwindigkeit zwischen 50 °C und 55 °C gehalten. Die Zeitdauer der Dosierung beträgt ca. 70 Minuten. Nach vollständiger Zudosierung des Methyltrichlorsilans wird das System für 2 Stunden bei 100-120°C gehalten. Danach wird der Ansatz auf Raumtemperatur abgekühlt. Der HCl-Gehalt des Rohproduktes beträgt < 50 ppm.

**Synthesebeispiel: kontinuierliche Synthese-Rührkesselkaskade**

**Apparatur:**
1 1000ml Glasreaktor (= Reaktor 1) über Doppelmantel beheizbar; 2 Zuläufe; ein Rückflußkühler, Temperaturmessung und Rührer. 1 1000ml Dreihalskolben (=Reaktor 2) mit Rückflußkühler, Temperaturmessung und Rührer sowie Heizpilz. Reaktoren 1 und 2 sind mit einem Überlaufsystem verbunden, welches zusammen mit dem geeigneten Produktablauf das Einhalten eines konstanten Füllgrades von 600-700ml in den beiden Reaktoren ermöglicht, sowie die Produktförderung von Reaktor 1 nach Reaktor 2.
Die Gasableitung und gegebenenfalls das Anlegen von Vakuum erfolgt über den Rückflusskühler.
1 Produktauffanggefäß (Becherglas 1000ml)

zwei Dosierpumpen.

**Allgemeine Vorgehensweise:**

Reaktoren 1 und 2 werden mit Produkt aus der Batchreaktion M1-Silan und E-Glycol (siehe Synthesebeispiele Batchreaktion) bis zu einem Füllgrad von 60-70% (= 600 - 700 ml) gefüllt. Der Produktablauf von Reaktor 1 zu Reaktor 2 ist ebenfalls mit Produkt gefüllt. Methyltrichlorsilan und Ethylenglykol werden im molaren Verhältnis 1: 2,8 so zugegeben sowie das Endprodukt aus dem Reaktor 2 in den Produktauffangbehälter so abgegeben, daß 2h Verweilzeit resultieren und die anfangs eingestellten Füllstände konstant zwischen 60-70% bleiben.

**Beispiel:**

Dosierung:
151 ml/h Methyltrichlorsilan und 197ml/h Ethylenglykol werden über zwei unabhängige Dosierpumpen in den gerührten Reaktor 1 gefördert. Die Innentemperatur des Reaktor 1 wird gegebenenfalls mittels Heizung auf 50-60°C gehalten.
Nachreaktion:
Das aus dem Reaktor 1 über den Überlauf in den Reaktor 2 fließende Rohprodukt wird, ebenfalls unter ständigem Rühren, mittels Heizpilz auf 120°C Innentemperatur gebracht, wodurch innerhalb von zwei Stunden die Umsetzung vollständig abläuft.
Entgasung:
Die bei dieser kontinuierlichen Reaktionskaskade gebildete HCl wird kontinuierlich über die Rückflußkühler durch Verwendung von Stickstoff als Strippgas abgeführt.
Das resultierende Produkt hat einen Rest-HCl-Gehalt von <150 ppm.

**Anwendungsbeispiele**

In den folgenden Anwendungsbeispielen für die Gipshydrophobierung beziehen sich alle Angaben von Teilen und Prozentsätzen auf das Gewicht. Die Beispiele wurden bei einem Druck der umgebenden Atmosphäre, also etwa bei 0,1 MPa, und bei Raumtemperatur, also etwa bei 21 °C, durchgeführt. Die Viskositäten wurden bei 25°C gemessen.

**Beispiele 2 Wasseraufnahme**

**Herstellung der Probekörper**

Aus 100 Gewichtsteilen Naturgips ($CaSO_4$ * 0,5 $H_2O$), 70 Gewichtsteilen Wasser und gegebenenfalls weiteren Gewichtsteilen Zusatz wurde ein Gipsbrei hergestellt und in Formen zu Probekörperscheiben mit 8 cm Durchmesser und 2 cm Höhe gegossen. Nach 30 Minuten wurden die erstarrten Probekörper entschalt. Die Probekörper wurden zuerst 24 Stunden bei 40 °C und danach 3 Tage bei 20 °C getrocknet.

**Wasseraufnahme analog DIN 18180**

Die Probekörper wurden in horizontaler Lage in Wasser von 23°C so eingetaucht, dass 2 cm Wassersäule über der Probenoberfläche stand. Nach zweistündiger Wasserlagerung wurden die Probekörper aus dem Wasser genommen, das oberflächlich anhaftende Wasser wurde entfernt und die Massenzunahme durch Wägen bestimmt.

**a) (nicht erfindungsgemäss)** Gips ohne Zusätze hatte eine Wasseraufnahme von 40,67 Gew.%.

**b) (erfindungsgemäss)** Als Zusatz wurde zum Gipsbrei gegeben:
1,0 % eines erfindungsgemäßen glykolfunktionellen Siloxans gemäß Beispiel 1a und 0,5 Gew.% eines Portlandzementes. Der Gips hatte eine Wasseraufnahme von 2,5 Gew.%.

**c) (erfindungsgemäß)** Als Zusätze zum Gipsbrei wurden gegeben:
0,5 Gew.% eines erfindungsgemäßen glykolfunktionellen Siloxans gemäß Beispiel 1a und 0,5 % eines Portlandzementes. Der Gips hatte eine Wasseraufnahme von 3,03 Gew.%.

**d)** Als Zusätze wurden zum Gipsbrei gegeben:
0,5 Gew.% eines glykolfunktionellen Siloxans hergestellt aus 1 Moläquivalent Methyltrichlorsilan und 4 Moläquivalenten Ethylenglykol, wobei die gleiche Verfahrensweise wie in Beispiel 1a wiedergegeben gewählt wurde und 0,5 Gew.% eines Portlandzementes. Der Gips hatte eine Wasseraufnahme von 7,66 Gew.%.

**e) (nicht erfindungsgemäss)** Als Zusatz wurde zum Gipsbrei gegeben:
0,4 Gew.% einer 50 %igen Emulsion in Wasser von H-Siloxan: Trimethylsilyl-endblockiertes Polymethylhydrogen-siloxangemisch der Formel $(CH_3)_3SiO[SiH(CH_3)O]_xSi(CH_3)_3$ mit x = 45 bis 90. Die Emulsion enthielt neben 50 Gewichtsteilen des H-Siloxans 2,5 Gewichtsteile eines Polyvinylalkohols als Emulgator in 47,5 Gewichtsteilen Wasser.
Der Gips hatte eine Wasseraufnahme von 4,78 %.

Die nicht erfindungsgemässen Beispiele zeigen, dass mit Produkten, die unter Verwendung einer anderen Stöchiometrie als der erfindungsgemäß angegebenen hergestellt werden, die wasserabweisende Wirkung deutlich schlechter wird und dass die Leistungsfähigkeit der erfindungsgemäßen glykolfunktionellen Siloxane der von H-Siloxan entspricht.

**Patentansprüche**

1. Wasserabweisende Gipszusammensetzung, enthaltend die Bestandteile

    (A) 100 Gewichtsteile Gips
    (B) 0,05 - 50 Gewichtsteile Oxid und/oder Hydroxid von Alkali und/oder Erdalkalimetallen
    (C) 0,05 - 20 Gewichtsteile glykolfunktionelles Siloxangemisch, herstellbar durch die Umsetzung aus 1 Moläquivalent Alkyltrihalogensilan oder Alkyltrialkoxysilans mit mindestens 2,5 Moläquivalenten eines Glykols oder Gemisches von Glykolen.

2. Wasserabweisende Gipszusammensetzung nach Anspruch 1, **dadurch gekennzeichnet, dass** als Oxid und/oder Hydroxid von Alkali und/oder Erdalkalimetallen (B) CaO, MgO, $Ca(OH)_2$, $Mg(OH)_2$ und NaOH oder beliebige Mischungen eingesetzt werden.

3. Wasserabweisende Gipszusammensetzung nach Anspruch 1 oder 2, **dadurch gekennzeichnet, dass**, bezogen auf 100 Gewichtsteile Gips (A), 0,1 bis 35 Gewichtsteile Oxid und/oder Hydroxid (B) eingesetzt werden.

4. Wasserabweisende Gipszusammensetzung nach Anspruch 1 bis 3, **dadurch gekennzeichnet, dass** das glykolfunktionelle Siloxangemisch (C) Silane, Öle oder Harze oder ein beliebiges Gemisch derselben enthält und sie aufgebaut sind aus Einheiten der allgemeinen Formel 1,

$$R_aSiG_bO_{\frac{4-a-b}{2}} \qquad\qquad (1),$$

in der
 R einen einwertigen, gegebenenfalls halogensubstituierten $C_1$-$C_{15}$-Kohlenwasserstoffrest oder einwertige Kohlenwasserstoffoxyreste oder Hydroxylgruppen bedeutet,
**a** 0, 1, 2 oder 3 bedeutet und im Mittel über das gesamte Molekül einen Mindestwert von 0,1 besitzt,
**b** 0, 1, 2 oder 3 bedeutet und im Mittel über das gesamte Molekül einen Mindestwert von 0,1 besitzt,
**G** ein Sauerstoffatom, einen Hydroxyrest oder einen einwertigen oder zweiwertigen verzweigten oder linearen $C_1$-$C_{25}$-Glykolrest bedeutet, mit der Maßgabe, dass so viele Glykolreste enthalten sind, dass das Molekül wasserlöslich oder selbstemulgierend ist.

5. Wasserabweisende Gipszusammensetzung nach Anspruch 4, **dadurch gekennzeichnet, dass** das glykolfunktionelle Siloxangemisch (C) Silane, Öle oder Harze oder ein beliebiges Gemisch derselben enthält und sie aufgebaut sind aus Einheiten der allgemeinen Formel 1,

$$R_aSiG_bO_{\frac{4-a-b}{2}} \quad\quad\quad\quad (1),$$

in der

**R** einen einwertigen, gegebenenfalls halogensubstituierten $C_1$-$C_{15}$-Kohlenwasserstoffrest oder einwertige Kohlen-wasserstoffoxyreste oder Hydroxylgruppen besitzt,

**a** 0, 1, 2 oder 3 bedeutet und im Mittel über das gesamte Molekül einen Mindestwert von 0,1 besitzt,

**b** 0, 1, 2 oder 3 bedeutet und im Mittel über das gesamte Molekül einen Mindestwert von 0,1 besitzt,

**G** ein Sauerstoffatom, einen Hydroxyrest oder einen einwertigen oder zweiwertigen verzweigten oder linearen $C_1$-$C_{25}$-Glykolrest bedeutet, wobei die glykolfunktionellen Siloxane aus einer Umsetzung von Methytrialkoxysilan oder Methyltrihalogensilan mit einem verzweigten oder linearen $C_1$-$C_{25}$-Glykol erhalten werden, mit der Maßgabe, dass so viele Glykolreste enthalten sind, dass das Molekül wasserlöslich oder selbstemulgierend ist,

wobei die Stöchiometrie bei der Herstellung des glykolfunktionellen Siloxangemisches so gewählt wird, dass je Moläquivalent Methyltrichlorsilan bzw. Methyltrimethoxysilan 2,0 - 2,99 Moläquivalente des jeweiligen Glykols eingesetzt werden.

6. Wasserabweisende Gipszusammensetzung nach Anspruch 1 bis 5, **dadurch gekennzeichnet, dass** bezogen auf 100 Gewichtsteile Gips (A) 0,1 bis 8 Gewichtsteile glykolfunktionelle Siloxane (C) eingesetzt werden.

7. Verfahren zur wasserabweisenden Ausrüstung von Gips, bei dem

    (A) 100 Gewichtsteile Gips mit
    (B) 0,05 - 50 Gewichtsteile Oxid und/oder Hydroxid von Alkali und/oder Erdalkalimetallen und
    (C) 0,05 - 20 Gewichtsteile glykolfunktionelles Siloxangemisch, herstellbar durch die Umsetzung aus 1 Moläquivalent Alkyltrihalogensilan oder Alkyltrialkoxysilans mit mindestens 2,5 Moläquivalenten eines Glykols oder Gemisches von Glykolen, versetzt werden.

8. Verfahren zur wasserabweisenden Ausrüstung von Gips nach Anspruch 7, **dadurch gekennzeichnet, dass** der Gips mit einer wässrigen oder nicht wässrigen Zubereitung eines glykolfunktionellen Siloxangemisches nach einem der Ansprüche 1 bis 4 wasserabweisend gemacht wird.

9. Glykolfunktionelles Siloxangemisch herstellbar durch die Umsetzung eines Moläquivalents Alkyltrihalogensilans oder Alkyltrialkoxysilans mit 2,5 bis 2,9 Moläquivalent eines Glykols oder Gemisches von Glykolen.

10. Glykolfunktionelles Siloxangemisch nach Anspruch 9, **dadurch gekennzeichnet, dass** das Glykol Ethylenglykol oder Propylenglykol ist.

11. Verfahren zur Herstellung eines glykolfunktionellen Siloxangemisches nach Anspruch 9 oder 10, **dadurch gekennzeichnet, dass** ein Moläquivalent eines Alkyltrihalogensilans oder Alkyltrialkoxysilans mit 2,5 bis 2,9 Moläquivalent eines Glykols oder Gemisches von Glykolen umgesetzt wird.

12. Verfahren zur Herstellung eines glykolfunktionellen Siloxangemisches nach Anspruch 11, **dadurch gekennzeichnet, dass** als Glykol Ethylenglykol oder Propylenglykol verwendet wird.

**Europäisches Patentamt**

**EUROPÄISCHER RECHERCHENBERICHT**

Nummer der Anmeldung

EP 05 02 5137

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 738 696 A (WACKER-CHEMIE GMBH) 23. Oktober 1996 (1996-10-23) * Anspruch 1 * ----- | 1-8 | C04B28/14 C07F7/18 |
| A | DE 10 76 946 B (GENERAL ELECTRIC COMPANY) 3. März 1960 (1960-03-03) * Beispiel 1 * ----- | 9-12 | |

**RECHERCHIERTE SACHGEBIETE (IPC)**

C04B
C07F

Der vorliegende Recherchenbericht wurde für alle Patentansprüche erstellt

| Recherchenort | Abschlußdatum der Recherche | Prüfer |
|---|---|---|
| München | 7. April 2006 | Pollio, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 05 02 5137

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2006

| Im Recherchenbericht angeführtes Patentdokument | Datum der Veröffentlichung | Mitglied(er) der Patentfamilie | Datum der Veröffentlichung |
|---|---|---|---|
| EP 0738696 A | 23-10-1996 | AT 173237 T | 15-11-1998 |
| | | AU 699263 B2 | 26-11-1998 |
| | | AU 5075896 A | 31-10-1996 |
| | | BR 9601997 A | 06-10-1998 |
| | | CA 2174281 A1 | 21-10-1996 |
| | | CN 1137499 A | 11-12-1996 |
| | | DE 19514639 A1 | 24-10-1996 |
| | | ES 2126966 T3 | 01-04-1999 |
| | | JP 2929524 B2 | 03-08-1999 |
| | | JP 8290954 A | 05-11-1996 |
| | | KR 159893 B1 | 16-11-1998 |
| | | US 5626668 A | 06-05-1997 |
| DE 1076946 B | 03-03-1960 | BE 548468 A | |
| | | BE 557059 A | |
| | | US 2916461 A | 08-12-1959 |

EPO FORM P0461

Für nähere Einzelheiten zu diesem Anhang : siehe Amtsblatt des Europäischen Patentamts, Nr.12/82